# EUROPEAN PATENT APPLICATION

(11) **EP 4 657 646 A1**
(43) Date of publication of application: **03.12.2025**
(21) Application number: 23918558.0
(22) Date of filing: 01.12.2023
(51) Int. Cl.: H01M 50/548, H01M 50/105, H01M 50/164, H01M 50/178, H01M 50/531

(54) **BATTERY CELL**

(30) Priority: 23.01.2023 JP 2023007904
(71) Applicant: AESC Japan Ltd., Yokohama-Shi, Kanagawa 220-0012 (JP)
(72) Inventor: NAKAI, Masayuki, Zama-shi, Kanagawa 252-0012 (JP); OOKA, Aika, Zama-shi, Kanagawa 252-0012 (JP)
(74) Representative: Mathys & Squire
(86) International application number: PCT/JP2023/043087
(87) International publication number: WO 2024/157603

(57) **Abstract**

ABSTRACT: A battery cell (10A) includes a battery element (100), a front lid member (210A) covering an end part of the battery element (100), an exterior film (400) of which at least a part is wound around the battery element (100), a front barrier conductor (312A) covering at least a part of the front lid member (210A), and a front projecting conductor (314A) connected to the front barrier conductor (312A) and projecting from the front barrier conductor (312A).

## Description

### TECHNICAL FIELD

The present invention relates to a battery cell.

### BACKGROUND ART

In recent years, various structures of battery cells such as lithium ion secondary battery cells have been developed. The battery cell described in Patent Document 1, for example, includes a battery element, two lid members, and an exterior film. The two lid members cover longitudinally opposite end parts of the battery element. A tab electrically connected to the battery element is drawn from each lid member. The exterior film is wound around the longitudinal direction of the battery element.

### RELATED DOCUMENT

### PATENT DOCUMENT

Patent Document 1: Pamphlet of International Publication No. WO 2021/157731

### SUMMARY OF THE INVENTION

### TECHNICAL PROBLEM

In the battery cell described in Patent Document 1, for example, the lid member may consist of a resin having relatively high moisture permeability and gas permeability. In this case, a barrier material such as metal may be provided in at least a portion of the lid member to inhibit the permeation of moisture or gas through the lid member. The barrier material may be spaced apart from a conductor, such as a tab or a lead, electrically connected to the battery element. Simply spacing the barrier material and the conductor apart from each other may, however, increase the volume of the battery cell by the space for spacing the barrier material and the conductor from each other.

An example of the object of the present invention is to reduce the space for providing the barrier material and the conductor electrically connected to the battery element. Other objects of the present invention will become apparent from the description of the present specification.

### SOLUTION TO PROBLEM

An aspect of the present invention is as follows.
[1] A battery cell including:
   a battery element;
   a lid member covering an end part of the battery element;
   an exterior film of which at least a part is wound around the battery element;
   a barrier conductor covering at least a part of the lid member; and
   a projecting conductor connected to the barrier conductor and projecting from the barrier conductor.
[2] The battery cell according to [1], in which the barrier conductor and the projecting conductor are integrated.
[3] The battery cell according to [1] or [2], in which the projecting conductor is bent with respect to the barrier conductor.
[4] The battery cell according to [1] or [2], in which the barrier conductor and the projecting conductor are joined to each other.
[5] The battery cell according to [1] or [2], in which the projecting conductor is stamped against the barrier conductor.
[6] The battery cell according to [1] or [2], in which the barrier conductor and the projecting conductor are extrudates.

### ADVANTAGEOUS EFFECTS OF INVENTION

According to the aspect described above of the present invention, the space for providing the barrier material and the conductor electrically connected to the battery element can be reduced.

### BRIEF DESCRIPTION OF THE DRAWINGS

[FIG. 1] A front perspective view of a battery cell according to Embodiment 1.
[FIG. 2] A front enlarged perspective view of a part of the battery cell according to Embodiment 1.
[FIG. 3] A right side view of the battery cell according to Embodiment 1.
[FIG. 4] An exploded perspective view of a front lid member and a front conductor according to Embodiment 1.
[FIG. 5] A schematic view of a first example of a cross section of the front lid member and the front conductor according to Embodiment 1.
[FIG. 6] A schematic view of a second example of a cross section of the front lid member and the front conductor according to Embodiment 1.
[FIG. 7] A schematic cross-sectional view of a front lid member, a first front conductor, and a second front conductor according to a variant of Embodiment 1.
[FIG. 8] An exploded perspective view of a front lid member and a front conductor according to Embodiment 2.
[FIG. 9] A view for explaining an example of a method of manufacturing a front conductor according to Embodiment 2.
[FIG. 10] A schematic view of an example of a cross section of a front lid member and a front conductor according to Embodiment 2.
[FIG. 11] A perspective view of a front conductor according to a variant of Embodiment 2.
[FIG. 12] An exploded perspective view of a front lid member and a front conductor according to Embodiment 3.
[FIG. 13] An exploded perspective view of a front lid member and a front conductor according to a variant of Embodiment 3.
[FIG. 14] A schematic cross-sectional view of a front lid member and a front conductor according to Embodiment 4.
[FIG. 15] A schematic cross-sectional view of a front lid member and a front conductor according to a first example of Embodiment 5.
[FIG. 16] A schematic cross-sectional view of a front lid member and a front conductor according to a second example of Embodiment 5.
[FIG. 17] A schematic cross-sectional view of a front lid member and a front conductor according to a first example of Embodiment 6.
[FIG. 18] A schematic cross-sectional view of a front lid member and a front conductor according to a second example of Embodiment 6.
[FIG. 19] A schematic cross-sectional view of a front lid member and a front conductor according to Embodiment 7.

### DESCRIPTION OF EMBODIMENTS

Hereinafter, embodiments and variants of the present invention will be described with reference to the accompanying drawings. In all drawings, the same constituent elements are denoted by the same reference signs, and detailed description thereof will not be repeated.

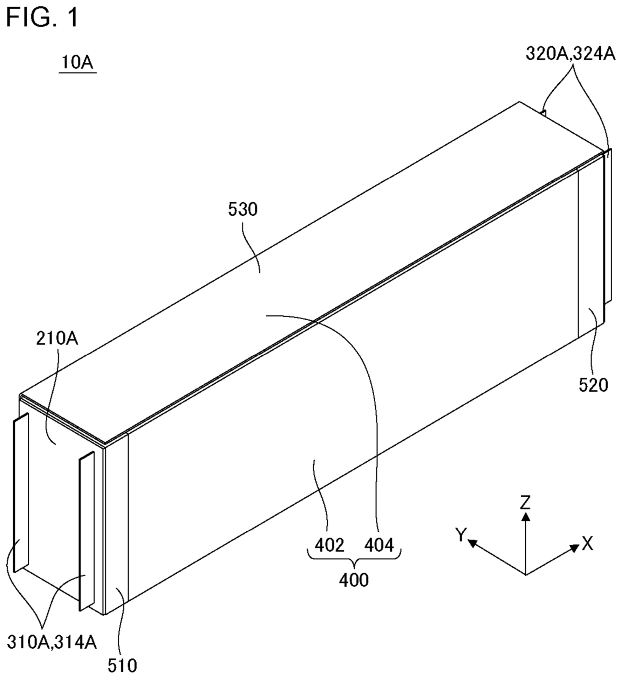

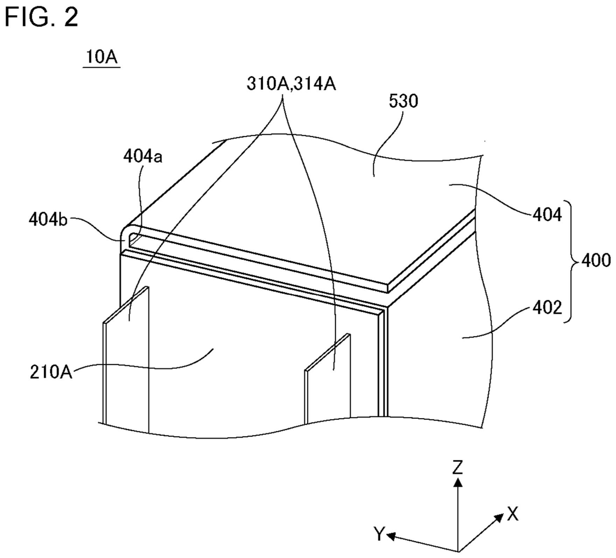

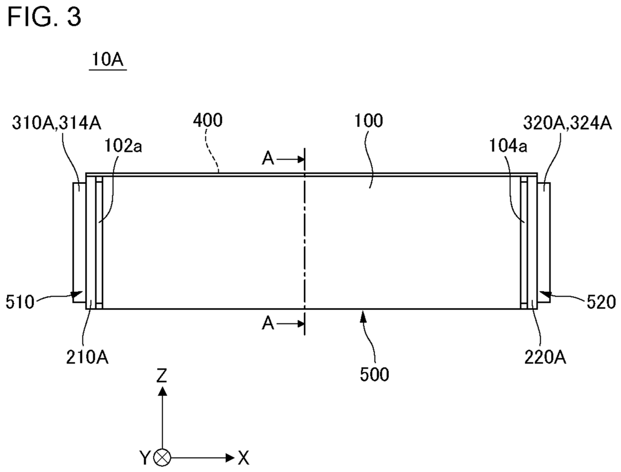

FIG. 1 is a front perspective view of a battery cell 10A according to Embodiment 1. FIG. 2 is a front enlarged perspective view of a part of the battery cell 10A according to Embodiment 1. FIG. 3 is a right side view of the battery cell 10A according to Embodiment 1. In FIG. 3, for the sake of description, an exterior film 400 is depicted as being transmitted through.

In each figure, the X direction, the Y direction, and the Z direction are marked for description. The X direction indicates a front-rear direction of the battery cell 10A. The Y direction is orthogonal to the X direction. The Y direction indicates a left-right direction of the battery cell 10A. The Z direction is orthogonal to both the X direction and the Y direction. The Z direction indicates an up-down direction of the battery cell 10A. The direction indicated by an arrow indicating the X direction, the direction indicated by an arrow indicating the Y direction, and the direction indicated by an arrow indicating the Z direction are a rear direction, a left direction, and an upper direction, respectively. However, the relationship between the X direction, the Y direction, the Z direction, the front-rear direction, the left-right direction, and the up-down direction of the battery cell 10A is not limited to this example. The white circle with X indicating the X direction, the Y direction, or the Z direction indicates that a direction from the front to the back of the paper surface is a direction indicated by the arrow indicating the direction. The white circle with a black dot indicating the X direction, the Y direction, or the Z direction indicates that a direction from the back to the front of the paper surface is a direction indicated by the arrow indicating the direction.

Hereinafter, a plane perpendicular to the X direction is referred to as a YZ plane as necessary. Hereinafter, a plane perpendicular to the Y direction is referred to as a ZX plane as necessary. Hereinafter, a plane perpendicular to the Z direction is referred to as an XY plane as necessary.

The battery cell 10A includes a battery element 100, a front lid member 210A, a rear lid member 220A, a front conductor 310A, a rear conductor 320A, and the exterior film 400. The exterior film 400 has a wound portion 402 and a drawn portion 404.

The battery element 100 has a substantially rectangular parallelepiped shape. The longitudinal direction of the battery element 100 is substantially parallel to the X direction. The lateral direction of the battery element 100 is substantially parallel to the Z direction. The thickness direction of the battery element 100 is substantially parallel to the Y direction.

The battery element 100 has at least one unillustrated positive electrode, at least one unillustrated negative electrode, and at least one unillustrated separator. For example, a plurality of positive electrodes and a plurality of negative electrodes are alternately stacked in the Y direction. At least a part of the separator is located between the positive electrode and the negative electrode adjacent to each other in the Y direction. For example, each of a plurality of sheet shape separators may be located between the positive electrode and the negative electrode adjacent to each other in the Y direction. Alternatively, one sheet shape separator may have a zigzag shape that passes through a region between the positive electrode and the negative electrode adjacent to each other in the Y direction. Alternatively, the positive electrode, the negative electrode, and the separator may be wound such that the separator is disposed between the positive electrode and the negative electrode. In one example, the positive electrode, the negative electrode, and the separator are wound as both surfaces of one of the positive electrode and the negative electrode covered with the separator. In another example, a stack including a plurality of unit stacks each including a positive electrode, a separator, and a negative electrode in this order may be wound. However, the winding structure of the positive electrode, the negative electrode, and the separator is not limited to these examples.

In the embodiment, the battery cell 10A is a battery cell containing an electrolytic solution. However, the battery cell 10A may be an all-solid state battery. In the all-solid state battery, a solid electrolyte layer is provided in a portion corresponding to a separator. The all-solid state battery does not contain an electrolytic solution. Hereinafter, unless otherwise specified, the battery cell 10A will be described as a battery cell containing an electrolytic solution.

The front lid member 210A covers the front end part of the battery element 100. The front lid member 210A is made of a resin such as polypropylene, for example. The front lid member 210A has a substantially rectangular shape as viewed from the front. As viewed from the front, the longitudinal direction of the front lid member 210A is substantially parallel to the Z direction, and the lateral direction of the front lid member 210A is substantially parallel to the Y direction.

The rear lid member 220A covers the rear end part of the battery element 100. The rear lid member 220A is made of a resin such as polypropylene, for example. The rear lid member 220A has a substantially rectangular shape as viewed from the rear. As viewed from the rear, the longitudinal direction of the rear lid member 220A is substantially parallel to the Z direction, and the lateral direction of the rear lid member 220A is substantially parallel to the Y direction.

As will be described in detail later, the front conductor 310A has two front projecting conductors 314A. The two front projecting conductors 314A are arranged in the Y direction. Each front projecting conductor 314A projects forward from the front lid member 210A. Each front projecting conductor 314A is electrically connected to a positive electrode current collector 102a drawn forward from the positive electrode of the battery element 100. As a result, each front projecting conductor 314A is electrically connected to a plurality of positive electrodes of the battery element 100. Accordingly, each front projecting conductor 314A functions as a positive electrode tab.

The rear conductor 320A has two rear projecting conductors 324A in the same way as the front conductor 310A. The two rear projecting conductors 324A are arranged in the Y direction. Each rear projecting conductor 324A projects rearward from the rear lid member 220A. Each rear projecting conductor 324A is electrically connected to the negative electrode current collector 104a drawn rearward from the negative electrode of the battery element 100. As a result, each rear projecting conductor 324A is electrically connected to a plurality of negative electrodes of the battery element 100. Accordingly, each rear projecting conductor 324A functions as a negative electrode tab.

As shown in FIG. 1 and FIG. 2, the wound portion 402 has a substantially tubular shape open both forward and rearward. The front lid member 210A is disposed inside the front opening of the wound portion 402. The rear lid member 220A is disposed inside the rear opening of the wound portion 402. The wound portion 402 is wound once around the battery element 100, the front lid member 210A, and the rear lid member 220A in the X direction. Thus, the front lid member 210A, the rear lid member 220A, and the wound portion 402 form an accommodation space 500 that accommodates the battery element 100. An electrolytic solution, not illustrated, is accommodated in the accommodation space 500 together with the battery element 100. The state of the winding of the battery element 100 by the wound portion 402 is not limited to the example described above.

In the examples shown in FIG. 1 and FIG. 2, at least a portion of the front surface of the front lid member 210A around the front projecting conductor 314A is exposed from the exterior film 400. However, the exterior film 400 may cover the front surface of the front lid member 210A around the front projecting conductor 314A. In the same manner, at least a portion of the rear surface of the rear lid member 220A around the rear projecting conductor 324A is exposed from the exterior film 400. However, the exterior film 400 may cover the rear surface of the rear lid member 220A around the rear projecting conductor 324A.

The outer peripheral surface of the front lid member 210A around the X direction and the inner peripheral surface of the front opening of the wound portion 402 around the X direction are joined to each other by thermal welding, for example. A front sealing portion 510 is formed accordingly.

The outer peripheral surface of the rear lid member 220A around the X direction and the inner peripheral surface of the rear opening of the wound portion 402 around the X direction are joined to each other by thermal welding, for example. A rear sealing portion 520 is formed accordingly.

As shown in FIG. 1 and FIG. 2, the drawn portion 404 is drawn from the upper left corner of the battery element 100 of the wound portion 402 as viewed from the front. Specifically, as shown in FIG. 2, the drawn portion 404 includes a first drawn portion 404a and a second drawn portion 404b. The first drawn portion 404a is drawn from one of opposite ends of the wound portion 402 in the circumferential direction around the X direction. The second drawn portion 404b is drawn from the other of the opposite ends of the wound portion 402 in the circumferential direction around the X direction. The first drawn portion 404a and the second drawn portion 404b are joined to each other by thermal welding, for example. Thus, , a side sealing portion 530 is formed as viewed from the front. The drawn portion 404 is bent along the upper surface of the battery element 100. However, the drawn portion 404 may not be bent. In addition, the bending shape of the drawn portion 404 is not limited to the shape according to Embodiment 1.

In Embodiment 1, the front end part and the rear end part of the battery element 100 are covered with two lid members. When both the positive electrode tab and the negative electrode tab are drawn from the front end part of the battery element 100, for example, however, the rear end part of the battery element 100 may not be covered with the lid member and the front end part of the battery element 100 may be covered with the lid member. That is, the lid member may cover only the side from which the positive electrode tab and the negative electrode tab of the battery element 100 are drawn. In this case, the exterior film 400 may be sealed and folded along the battery element 100 on the side of the battery element 100 opposite to the lid member.

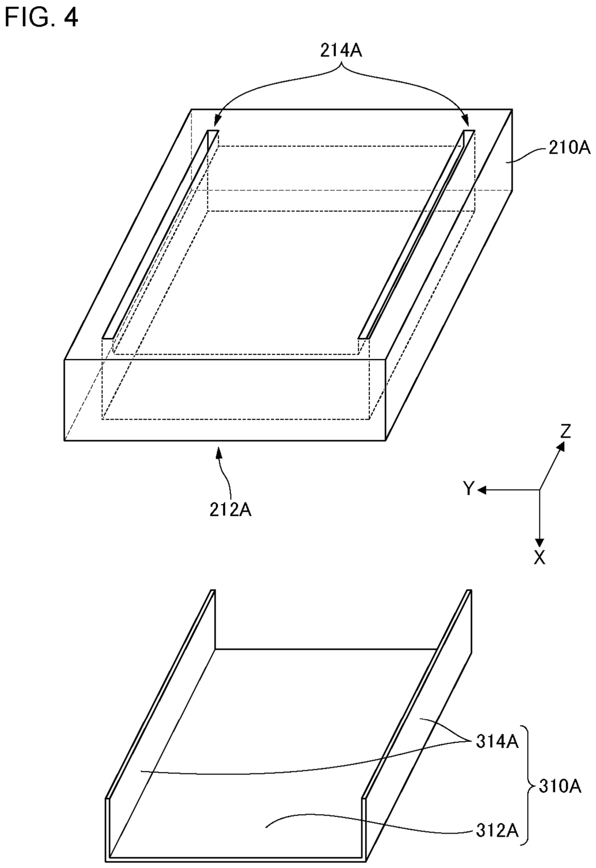

FIG. 4 is an exploded perspective view of the front lid member 210A and the front conductor 310A according to Embodiment 1. The discussion regarding the front lid member 210A and the front conductor 310A using FIG. 4 can be similarly applied to the rear lid member 220A and the rear conductor 320A.

A recess portion 212A is provided on the rear surface of the front lid member 210A. The recess portion 212A is open rearward. The front surface of the front lid member 210A is provided with two through-holes 214A arranged in the Y direction. The rear end of the left through-hole 214A extends through the left end part of the bottom surface of the recess portion 212A. The rear end of the right through-hole 214A extends through the right end part of the bottom surface of the recess portion 212A.

The front conductor 310A has a front barrier conductor 312A and the two front projecting conductors 314A. The front barrier conductor 312A has a substantial plate shape substantially parallel to the YZ plane. The two front projecting conductors 314A project forward from opposite ends of the front barrier conductor 312A in the Y direction. Each front projecting conductor 314A has a substantial plate shape substantially parallel to the ZX plane.

The front barrier conductor 312A is made of a material having relatively low moisture permeability and gas permeability. Examples of this material include metal. When the front lid member 210A and the front conductor 310A are attached to each other, the front barrier conductor 312A covers at least a part of the bottom surface of the recess portion 212A. As a result, even if the moisture permeability and the gas permeability of the front lid member 210A are relatively high, the moisture and gas that enter the accommodation space 500 from the front lid member 210A can be reduced as compared with the case where the front barrier conductor 312A is not provided. Accordingly, the sealing of the battery cell 10A can be improved as compared with the case where the front barrier conductor 312A is not provided.

When the front lid member 210A and the front conductor 310A are attached to each other, each front projecting conductor 314A extends through each through-hole 214A in the X direction. **In** this state, the front end of each front projecting conductor 314A projects forward from the front surface of the front lid member 210A. The positive electrode current collector 102a is electrically connected to the rear surface of the front barrier conductor 312A. As a result, the battery element 100 and each front projecting conductor 314A are electrically connected to each other through the front barrier conductor 312A.

The front barrier conductor 312A and the two front projecting conductors 314A are integrally connected to each other. That is, the front barrier conductor 312A and the two front projecting conductors 314A are integrated. As a result, the space for spacing the front barrier conductor 312A and the two front projecting conductors 314A apart from each other is not required. Accordingly, the space for providing the front barrier conductor 312A and the two front projecting conductors 314A can be reduced as compared with the case where the front barrier conductor 312A and the two front projecting conductors 314A are spaced apart from each other.

In the example shown in FIG. 4, each front projecting conductor 314A is bent forward with respect to the front barrier conductor 312A. As a result, the front conductor 310A is easily manufactured as compared with the case where each front projecting conductor 314A is joined to the front barrier conductor 312A by a method such as welding. However, each front projecting conductor 314A may be joined to the front barrier conductor 312A by a method such as welding. When the front barrier conductor 312A and each front projecting conductor 314A are joined to each other, the front barrier conductor 312A and the front projecting conductor 314A can be formed of different materials. Alternatively, the front barrier conductor 312A and the front projecting conductor 314A may be formed of the same material.

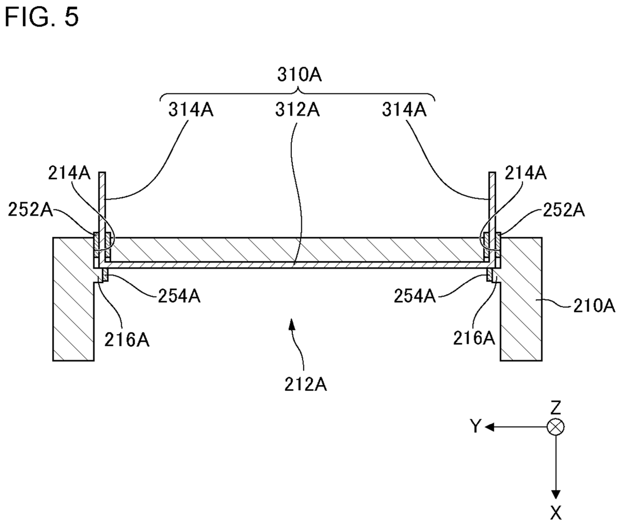

FIG. 5 is a schematic view of a first example of a cross section of the front lid member 210A and the front conductor 310A according to Embodiment 1. The cross section shown in FIG. 5 shows a cross section parallel to the XY plane at a substantial center portion of the front lid member 210A and the front conductor 310A in the Z direction.

A locking portion 216A is provided on the inner side surface of the recess portion 212A. In the cross section shown in FIG. 5, a pair of locking portions 216A are provided on opposite inner side surfaces of the recess portion 212A in the Y direction. Each locking portion 216A projects from the inner side surface of the recess portion 212A toward the center of the recess portion 212A in the Y direction. The material that forms the locking portion 216A may be the same as or different from the material that forms the front lid member 210A.

The front conductor 310A is locked to the front lid member 210A by the locking portion 216A. In the cross section shown in FIG. 5, the opposite end parts of the front barrier conductor 312A in the Y direction enter a gap between the opposite end parts of the bottom surface of the recess portion 212A in the Y direction and the front side surfaces of the pair of locking portions 216A. As a result, the front lid member 210A and the front conductor 310A can be mechanically joined to each other.

A gap between the outer side surface of each front projecting conductor 314A and the inner side surface of each through-hole 214A is filled with a sealing resin 252A. As a result, the intrusion of moisture and gas via the gap can be inhibited as compared with the case where the sealing resin 252A is not provided.

A gap between each of opposite end parts of the rear surface of the front barrier conductor 312A in the Y direction and each front side surface of the pair of locking portions 216A is covered with a coating resin 254A. The coating resin 254A is provided inside the recess portion 212A with respect to these gaps. As a result, the intrusion of moisture and gas via the gap can be inhibited as compared with the case where the coating resin 254A is not provided.

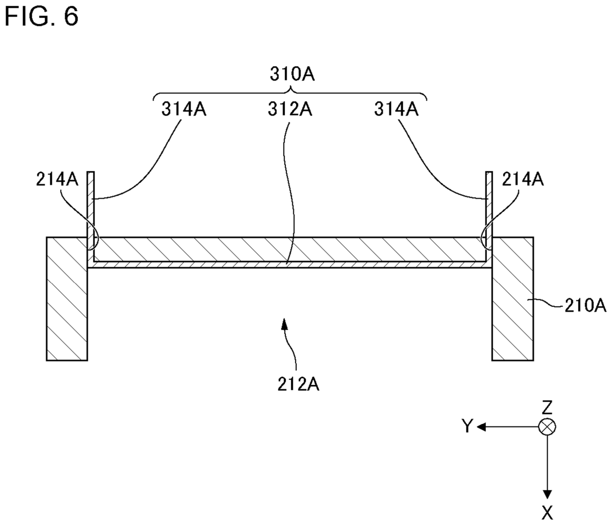

FIG. 6 is a schematic view of a second example of the cross section of the front lid member 210A and the front conductor 310A according to Embodiment 1.

In the example shown in FIG. 6, the front lid member 210A and the front conductor 310A are joined to each other by a mold resin present between the bottom surface of the recess portion 212A of the front lid member 210A and the upper surface of the front barrier conductor 312A. As a result, the front lid member 210A and the front conductor 310A can be chemically joined to each other. The mold resin is formed as follows, for example. First, the resin is applied to the upper surface of the front barrier conductor 312A. Next, each front projecting conductor 314A is inserted into each through-hole 214A. In this state, the bottom surface of the recess portion 212A and the upper surface of the front barrier conductor 312A are in contact with each other through the resin. Next, the resin present between the bottom surface of the recess portion 212A and the upper surface of the front barrier conductor 312A is cured by heating.

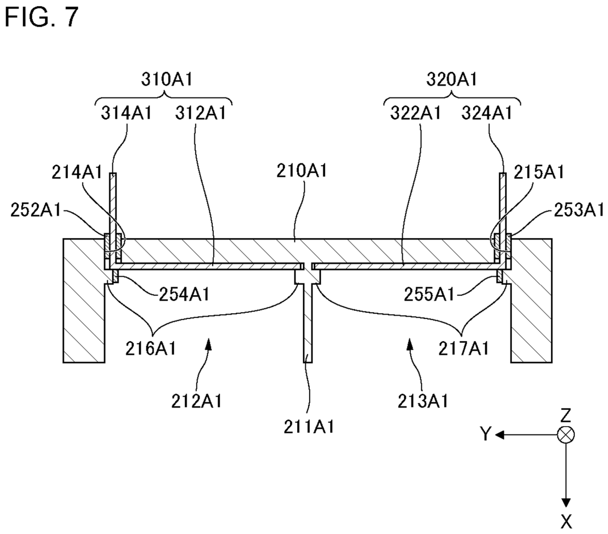

FIG. 7 is a schematic cross-sectional view of a front lid member 210A1, a first front conductor 310A1, and a second front conductor 320A1 according to a variant of Embodiment 1. The front lid member 210A1, the first front conductor 310A1, and the second front conductor 320A1 according to the present variant are the same as the front lid member 210A and the front conductor 310A according to Embodiment 1 except for the following points.

A first recess portion 212A1 and a second recess portion 213A1 are provided on the rear surface of the front lid member 210A1. In the cross section shown in FIG. 7, the first recess portion 212A1 and the second recess portion 213A1 are separated from each other in the Y direction by a partition wall 211A1. The partition wall 211A1 is disposed at the substantial center portion of the rear surface of the front lid member 210A1 in the Y direction. The first recess portion 212A1 is located on the left side of the partition wall 211A1. The second recess portion 213A1 is located on the right side of the partition wall 211A1. A first through-hole 214A1 is provided at the left end part of the bottom surface of the first recess portion 212A1. That is, the first through-hole 214A1 is located at the end part of the bottom surface of the first recess portion 212A1 opposite to the partition wall 211A1 in the Y direction. A second through-hole 215A1 is provided at the right end part of the bottom surface of the second recess portion 213A1. That is, the second through-hole 215A1 is located at the end part of the bottom surface of the second recess portion 213A1 opposite to the partition wall 211A1 in the Y direction.

The first front conductor 310A1 has a first front barrier conductor 312A1 and a first front projecting conductor 314A1. The first front projecting conductor 314A1 is bent with respect to the first front barrier conductor 312A1. However, the first front barrier conductor 312A1 and the first front projecting conductor 314A1 may be joined to each other by a method such as welding. The second front conductor 320A1 has a second front barrier conductor 322A1 and a second front projecting conductor 324A1. The second front projecting conductor 324A1 is bent with respect to the second front barrier conductor 322A1. However, the second front barrier conductor 322A1 and the second front projecting conductor 324A1 may be joined to each other by a method such as welding.

When the front lid member 210A1 and the first front conductor 310A1 are attached to each other, the first front barrier conductor 312A1 covers at least a part of the bottom surface of the first recess portion 212A1. As a result, the sealing of the battery cell can be improved as compared with the case where the first front barrier conductor 312A1 is not provided. Similarly, when the front lid member 210A1 and the second front conductor 320A1 are attached to each other, the second front barrier conductor 322A1 covers at least a part of the bottom surface of the second recess portion 213A1. As a result, the sealing of the battery cell can be improved as compared with the case where the second front barrier conductor 322A1 is not provided.

When the front lid member 210A1 and the first front conductor 310A1 are attached to each other, the first front projecting conductor 314A1 extends through the first through-hole 214A1. In this state, the front end of the first front projecting conductor 314A1 projects forward from the front surface of the front lid member 210A1. Similarly, when the front lid member 210A1 and the second front conductor 320A1 are attached to each other, the second front projecting conductor 324A1 extends through the second through-hole 215A1. In this state, the front end of the second front projecting conductor 324A1 projects forward from the front surface of the front lid member 210A1.

One of a positive electrode current collector and a negative electrode current collector, not illustrated, is electrically connected to the rear surface of the first front barrier conductor 312A1. The other of the positive electrode current collector and the negative electrode current collector, not illustrated, is electrically connected to the rear surface of the second front barrier conductor 322A1. As a result, the first front projecting conductor 314A1 and the second front projecting conductor 324A1 function as tabs having different polarities. However, the polarity of the first front conductor 310A1 and the polarity of the second front conductor 320A1 may be the same. For example, a part of the positive electrode current collector drawn from the battery element, not illustrated, may be electrically connected to the first front conductor 310A1, and another part of the positive electrode current collector drawn from the battery element, not illustrated, may be electrically connected to the second front conductor 320A1.

In the cross section shown in FIG. 7, a pair of first locking portions 216A1 are provided on opposite inner side surfaces of the first recess portion 212A1 in the Y direction. The first front conductor 310A1 is locked to the front lid member 210A1 by a pair of first locking portions 216A1. In the cross section shown in FIG. 7, the opposite end parts of the first front barrier conductor 312A1 in the Y direction enter a gap between the opposite end parts of the bottom surface of the first recess portion 212A1 in the Y direction and the front side surfaces of the pair of first locking portions 216A1. As a result, the front lid member 210A1 and the first front conductor 310A1 can be mechanically joined to each other.

In the cross section shown in FIG. 7, a pair of second locking portions 217A1 are provided on opposite inner side surfaces of the second recess portion 213A1 in the Y direction. The second front conductor 320A1 is locked to the front lid member 210A1 by a pair of second locking portions 217A1 in the same way as the first front conductor 310A1.

The gap between the outer side surface of the first front projecting conductor 314A1 and the inner side surface of the first through-hole 214A1 is filled with a first sealing resin 252A1. Similarly, the gap between the outer side surface of the second front projecting conductor 324A1 and the inner side surface of the second through-hole 215A1 is filled with a second sealing resin 253A1. As a result, the intrusion of moisture and gas via the gaps can be inhibited as compared with the case where the first sealing resin 252A1 or the second sealing resin 253A1 is not provided.

A gap between the left end part of the rear surface of the first front barrier conductor 312A1 and the front side surface of the left first locking portion 216A1 is covered with the first coating resin 254A1. The first coating resin 254A1 is provided inside the first recess portion 212A1 with respect to the gap. A gap between the right end part of the rear surface of the second front barrier conductor 322A1 and the front side surface of the right second locking portion 217A1 is covered with the second coating resin 255A1. The second coating resin 255A1 is provided inside the second recess portion 213A1 with respect to the gap. As a result, the intrusion of moisture and gas via the gaps can be inhibited as compared with the case where the first coating resin 254A1 or the second coating resin 255A1 is not provided.

The first front barrier conductor 312A1 and the first front projecting conductor 314A1 are integrally connected to each other. That is, the first front barrier conductor 312A1 and the first front projecting conductor 314A1 are integrated. As a result, the space for providing the first front barrier conductor 312A1 and the first front projecting conductor 314A1 can be reduced as compared with the case where the first front barrier conductor 312A1 and the first front projecting conductor 314A1 are spaced apart from each other. Similarly, the second front barrier conductor 322A1 and the second front projecting conductor 324A1 are integrally connected to each other. That is, the second front barrier conductor 322A1 and the second front projecting conductor 324A1 are integrated. As a result, the space for providing the second front barrier conductor 322A1 and the second front projecting conductor 324A1 can be reduced as compared with the case where the second front barrier conductor 322A1 and the second front projecting conductor 324A1 are spaced apart from each other.

In the embodiment, the first front projecting conductor and the second front drawing conductor are arranged in the Y direction. That is, when the battery element 100 has a plurality of positive electrodes and a plurality of negative electrodes alternately stacked in the Y direction, the first front projecting conductor and the second front drawing conductor are arranged in a direction substantially parallel to the stack direction of the positive electrodes and the negative electrodes. However, the first front projecting conductor and the second front drawing conductor may be arranged in a direction substantially perpendicular to the stack direction. That is, the first front projecting conductor and the second front drawing conductor may be arranged in the Z direction. For example, an external connection conductor such as a bus bar may be disposed above or below the battery cell. When the first front projecting conductor and the second front drawing conductor are arranged in the Z direction, the first front projecting conductor and the second front drawing conductor can be easily connected to the external connection conductor as compared with the case where the first front projecting conductor and the second front drawing conductor are arranged in the Y direction.

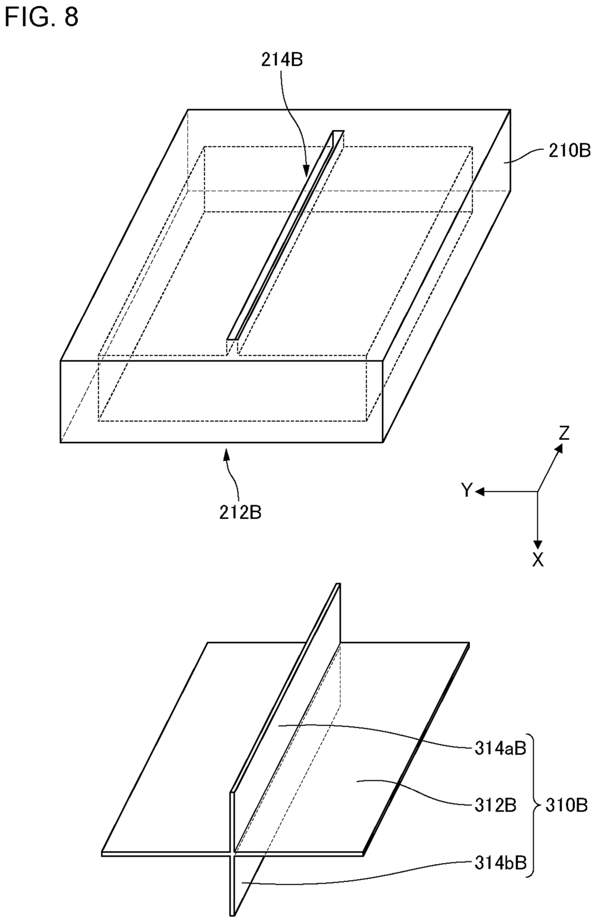

FIG. 8 is an exploded perspective view of a front lid member 210B and a front conductor 310B according to Embodiment 2. The front lid member 210B and the front conductor 310B according to Embodiment 2 are the same as the front lid member 210A and the front conductor 310A according to Embodiment 1, except for the following points.

The front conductor 310B includes a front barrier conductor 312B, an external projecting conductor 314aB, and an internal projecting conductor 314bB. The front barrier conductor 312B has a substantial plate shape substantially parallel to the YZ plane. The external projecting conductor 314aB and the internal projecting conductor 314bB have a substantial plate shape substantially parallel to the ZX plane. The external projecting conductor 314aB and the internal projecting conductor 314bB are disposed substantially at the center of the front barrier conductor 312B in the Y direction. The external projecting conductor 314aB projects forward from the front surface of the front barrier conductor 312B. The internal projecting conductor 314bB projects rearward from the rear surface of the front barrier conductor 312B.

When the front lid member 210B and the front conductor 310B are attached to each other, the front barrier conductor 312B covers at least a part of the bottom surface of a recess portion 212B of the front lid member 210B. As a result, the sealing of the battery cell can be improved as compared with the case where the front barrier conductor 312B is not provided.

When the front lid member 210B and the front conductor 310B are attached to each other, the external projecting conductor 314aB extends through a through-hole 214B of the front lid member 210B. In this state, the front end of the external projecting conductor 314aB projects forward from the front surface of the front lid member 210B. The internal projecting conductor 314bB is electrically connected to a positive electrode current collector, not illustrated. As a result, the battery element not illustrated and the external projecting conductor 314aB are electrically connected to each other through the front barrier conductor 312B and the internal projecting conductor 314bB. Accordingly, the external projecting conductor 314aB functions as a positive electrode tab.

The front barrier conductor 312B, the external projecting conductor 314aB, and the internal projecting conductor 314bB are integrally formed. That is, the front barrier conductor 312B, the external projecting conductor 314aB, and the internal projecting conductor 314bB are integrated. As a result, the space for spacing the front barrier conductor 312B, the external projecting conductor 314aB, and the internal projecting conductor 314bB apart from each other, as compared with the case where the front barrier conductor 312B, the external projecting conductor 314aB, and the internal projecting conductor 314bB are spaced apart from each other. Accordingly, the space for providing the front barrier conductor 312B, the external projecting conductor 314aB, and the internal projecting conductor 314bB can be reduced as compared with the case described above.

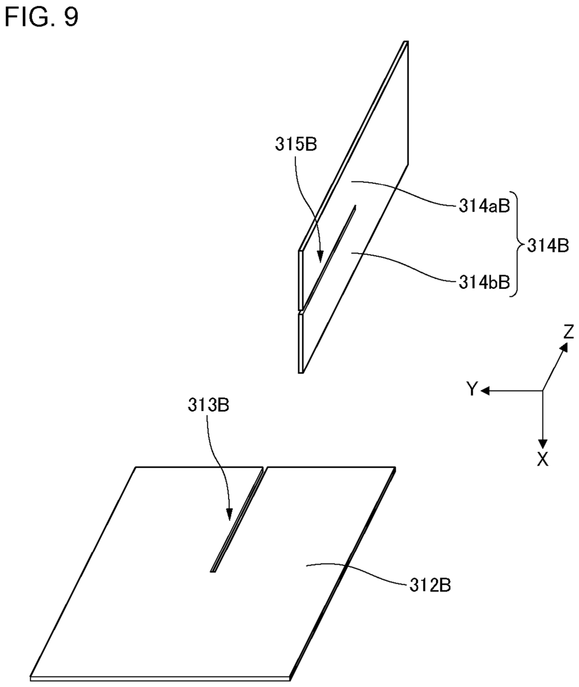

FIG. 9 is a view for explaining an example of a method of manufacturing the front conductor 310B according to Embodiment 2. In this example, the front conductor 310B is manufactured as follows.

First, the front barrier conductor 312B and a front conductor element 314B are prepared. The front barrier conductor 312B is provided with a first slit 313B. The first slit 313B extends substantially parallel to the Z direction in the substantial center portion of the front barrier conductor 312B in the Y direction. The upper end of the first slit 313B is open upward. The lower end of the first slit 313B is located at the substantial center portion of the front barrier conductor 312B in the Z direction. The front conductor element 314B is provided with a second slit 315B. The second slit 315B extends substantially parallel to the Z direction in the substantial center portion of the front conductor element 314B in the X direction. The lower end of the second slit 315B is open downward. The upper end of the second slit 315B is located at the substantial center portion of the front conductor element 314B in the Z direction.

Next, a portion of the front barrier conductor 312B located below the first slit 313B is inserted into the second slit 315B in the Z direction, and a portion of the front conductor element 314B located above the second slit 315B is inserted into the first slit 313B in the Z direction. In this state, the front barrier conductor 312B and the front conductor element 314B are disposed substantially orthogonal to each other as viewed from the Z direction.

Next, the front barrier conductor 312B and the front conductor element 314B are joined to each other by a method such as welding around the first slit 313B and around the second slit 315B. In this state, a portion of the front conductor element 314B located in front of the front barrier conductor 312B is the external projecting conductor 314aB. In this state, a portion of the front conductor element 314B located behind the front barrier conductor 312B is the internal projecting conductor 314bB.

In the bending processing of the conductor element, it may be difficult to form the projecting conductor such as the external projecting conductor 314aB and the internal projecting conductor 314bB at the substantial center portion of the front barrier conductor 312B in the Y direction. In Embodiment 2, on the other hand, the external projecting conductor 314aB and the internal projecting conductor 314bB are joined to the front barrier conductor 312B by a method such as welding. As a result, the projecting conductor such as the external projecting conductor 314aB and the internal projecting conductor 314bB can be easily formed at the substantial center portion of the front barrier conductor 312B in the Y direction, as compared with the bending processing of the conductor element.

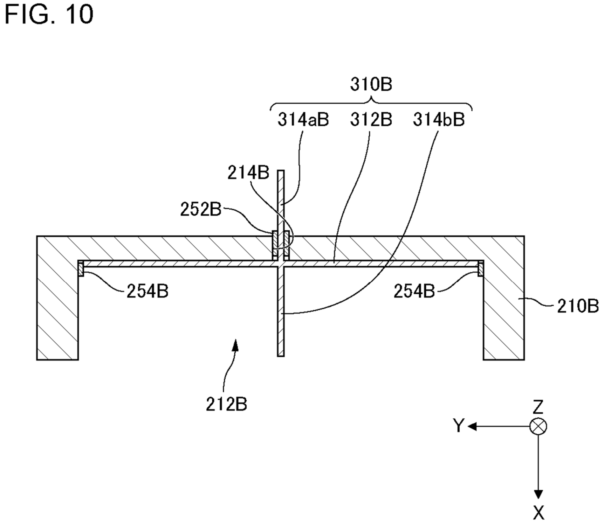

FIG. 10 is a schematic view of an example of a cross section of the front lid member 210B and the front conductor 310B according to Embodiment 2. The cross section shown in FIG. 10 shows a cross section parallel to the XY plane at the substantial center portion of the front lid member 210B and the front conductor 310B in the Z direction.

A gap between the outer side surface of the external projecting conductor 314aB and the inner side surface of the through-hole 214B is filled with a sealing resin 252B. As a result, the intrusion of moisture and gas via the gap can be inhibited as compared with the case where the sealing resin 252B is not provided.

A gap between opposite end parts of the front barrier conductor 312B in the Y direction and opposite inner side surfaces of the recess portion 212B in the Y direction is covered with a coating resin 254B. The coating resin 254B is provided behind the gap. As a result, the intrusion of moisture and gas via the gap can be inhibited as compared with the case where the coating resin 254B is not provided.

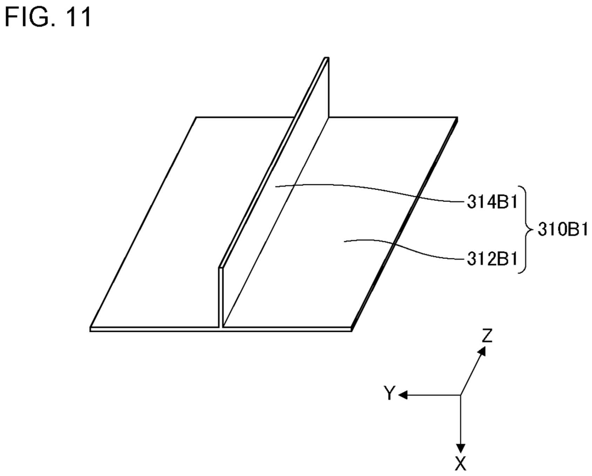

FIG. 11 is a perspective view of a front conductor 310B1 according to a variant of Embodiment 2.

The front conductor 310B1 according to the present variant includes a front barrier conductor 312B1 and a projecting conductor 314B1. As shown in FIG. 11, the front conductor 310B1 does not have a conductor corresponding to the internal projecting conductor 314bB according to Embodiment 2. In the present variant, a main positive electrode, not illustrated, is electrically connected to the rear surface of the front barrier conductor 312B1. As a result, the battery element not illustrated and the projecting conductor 314B1 are electrically connected to each other through the front barrier conductor 312B1.

The front barrier conductor 312B1 and the projecting conductor 314B1 are integrally connected to each other. That is, the front barrier conductor 312B1 and the projecting conductor 314B1 are integrated. As a result, the space for providing the front barrier conductor 312B1 and the projecting conductor 314B1 can be reduced as compared with the case where the front barrier conductor 312B1 and the projecting conductor 314B1 are spaced apart from each other.

In Embodiment 2, the projecting conductor is disposed substantially parallel to the ZX plane. However, the orientation of the projecting conductor is not limited to this example. For example, the projecting conductor may be disposed substantially parallel to the XY plane.

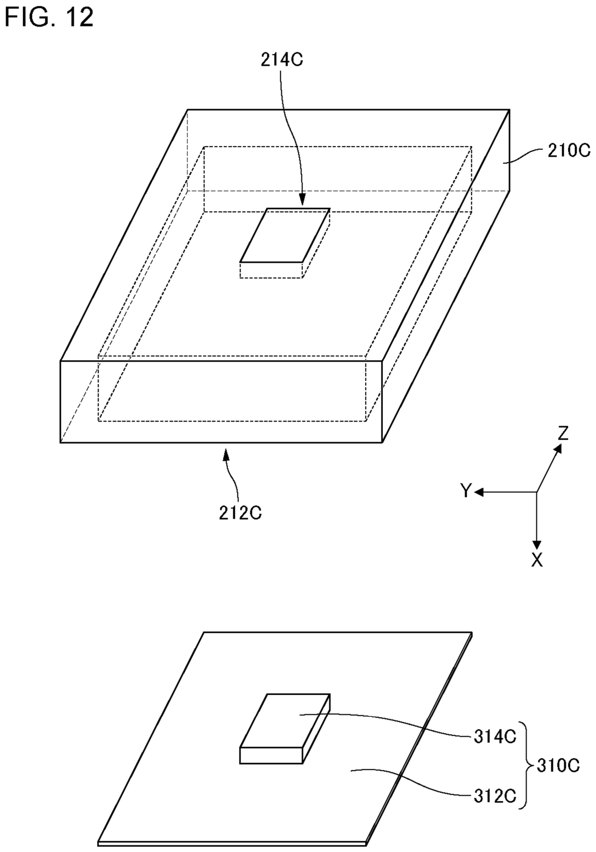

FIG. 12 is an exploded perspective view of a front lid member 210C and a front conductor 310C according to Embodiment 3. The front lid member 210C and the front conductor 310C according to Embodiment 3 are the same as the front lid member 210A and the front conductor 310A according to Embodiment 1 except for the following points.

A front projecting conductor 314C is disposed substantially at the center of the front barrier conductor 312C in the Y direction and the Z direction as viewed from the X direction. The front projecting conductor 314C projects forward with respect to the front surface of the front barrier conductor 312C. The front projecting conductor 314C has a substantially quadrangular shape as viewed from the X direction.

The front projecting conductor 314C is stamped against the front barrier conductor 312C. That is, the front projecting conductor 314C projects forward from the front surface of the front barrier conductor 312C by stamping. In this case, the front conductor 310C can be easily manufactured as compared with the case where the front barrier conductor 312C and the front projecting conductor 314C are joined to each other by a method such as welding. However, the method of manufacturing the front conductor 310C is not limited to this example. For example, the front barrier conductor 312C and the front projecting conductor 314C may be joined to each other by a method such as welding.

When the front lid member 210C and the front conductor 310C are attached to each other, the front barrier conductor 312C covers at least a part of the bottom surface of a recess portion 212C of the front lid member 210C. As a result, the sealing of the battery cell can be improved as compared with the case where the front barrier conductor 312C is not provided.

When the front lid member 210C and the front conductor 310C are attached to each other, the front projecting conductor 314C extends through a through-hole 214C of the front lid member 210C. In this state, the front surface of the front projecting conductor 314C projects forward from the front surface of the front lid member 210C. The positive electrode current collector, not illustrated, is electrically connected to the rear surface of the front barrier conductor 312C. As a result, the battery element not illustrated and the front projecting conductor 314C are electrically connected to each other through the front barrier conductor 312C. Accordingly, the front projecting conductor 314C functions as a positive electrode terminal.

The front barrier conductor 312C and the front projecting conductor 314C are integrally connected to each other. That is, the front barrier conductor 312C and the front projecting conductor 314C are integrated. As a result, the space for providing the front barrier conductor 312C and the front projecting conductor 314C can be reduced as compared with the case where the front barrier conductor 312C and the front projecting conductor 314C are spaced apart from each other.

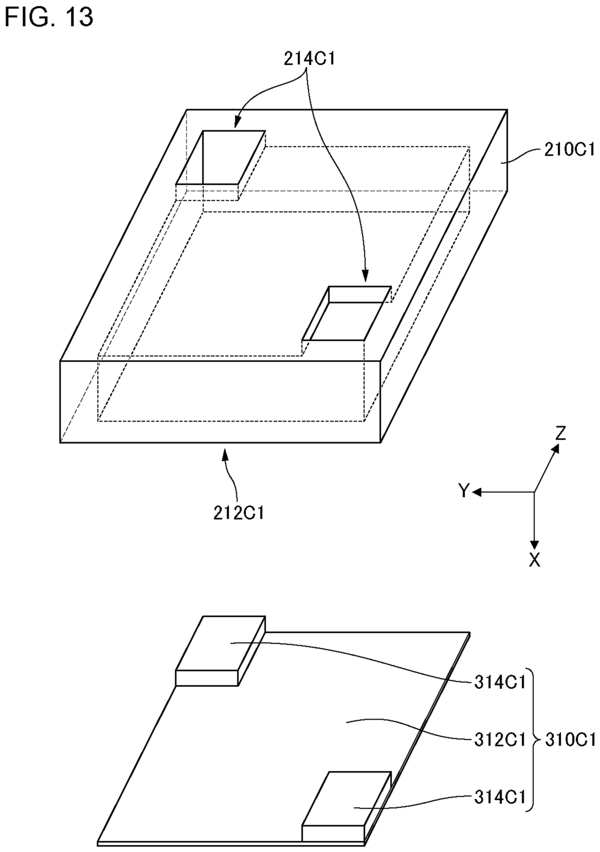

FIG. 13 is an exploded perspective view of a front lid member 210C1 and a front conductor 310C1 according to a variant of Embodiment 3. The front lid member 210C1 and the front conductor 310C1 according to the present variant are the same as the front lid member 210C and the front conductor 310C according to Embodiment 3, except for the following points.

The front conductor 310C1 according to the present variant has a plurality of front projecting conductors 314C1. As in the embodiment, each front projecting conductor 314C1 is stamped against a front barrier conductor 312C1. In the example shown in FIG. 13, the two front projecting conductors 314C1 are disposed at opposite corners of the substantially quadrangular front barrier conductor 312C1 as viewed from the X direction. However, the number and disposition of the front projecting conductors 314C1 are not limited to the example shown in FIG. 13. For example, the four front projecting conductors 314C1 may be disposed at four corners of the front barrier conductor 312C1 having a substantially quadrangular shape as viewed from the X direction.

In the present variant, when the front lid member 210C1 and the front conductor 310C1 are attached to each other, the front barrier conductor 312C1 also covers at least a part of the bottom surface of a recess portion 212C1 of the front lid member 210C1. In this state, each front projecting conductor 314C1 extends through each through-hole 214C1 of the front lid member 210C1. In this state, the front end surface of each front projecting conductor 314C1 projects forward from the front surface of the front lid member 210C1. Each through-hole 214C1 can function as a positive electrode terminal.

In the present variant, the front barrier conductor 312C1 and each front projecting conductor 314C1 are also integrally connected to each other. That is, the front barrier conductor 312C1 and each front projecting conductor 314C1 are integrated. As a result, the space for providing the front barrier conductor 312C1 and each front projecting conductor 314C1 can be reduced as compared with the case where the front barrier conductor 312C1 and each front projecting conductor 314C1 are spaced apart from each other.

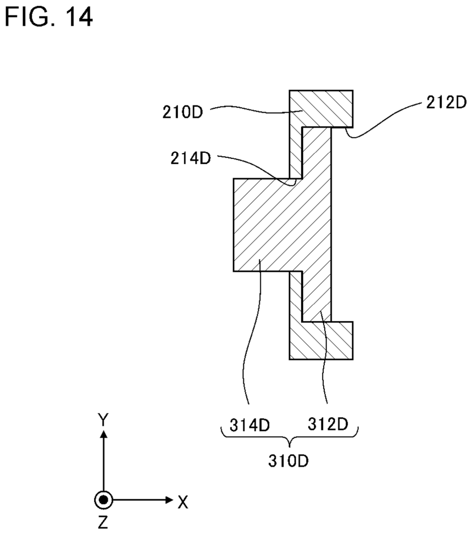

FIG. 14 is a schematic cross-sectional view of a front lid member 210D and a front conductor 310D according to Embodiment 4. The cross section shown in FIG. 14 shows a cross section parallel to the XY plane at the substantial center portion of the front lid member 210D and the front conductor 310D in the Z direction. The front lid member 210D and the front conductor 310D according to Embodiment 4 are the same as the front lid member 210A and the front conductor 310A according to Embodiment 1, except for the following points.

The front conductor 310D includes a front barrier conductor 312D and a front projecting conductor 314D. In Embodiment 4, the front barrier conductor 312D and the front projecting conductor 314D are metal blocks integrally processed by extrusion molding. That is, the front barrier conductor 312D and the front projecting conductor 314D are an integrated extrudate. If the front projecting conductor 314D projects with respect to the front barrier conductor 312D by stamping, a recess caused by the front projecting conductor 314D may be formed on the rear surface of the front barrier conductor 312D. In Embodiment 4, on the other hand, such a recess can be eliminated from forming on the rear surface of the front barrier conductor 312D. In Embodiment 4, therefore, the allowable current flowing in the front conductor 310D can be easily increased as compared with the case where the front projecting conductor 314D projects with respect to the front barrier conductor 312D by stamping.

The front barrier conductor 312D covers at least a portion of the bottom surface of a recess portion 212D of the front lid member 210D. A positive electrode current collector, not illustrated, or a negative electrode current collector, not illustrated, is electrically connected to the rear surface of the front barrier conductor 312D. The front projecting conductor 314D projects forward from the front surface of the front barrier conductor 312D. The front projecting conductor 314D extends through a through-hole 214D of the front lid member 210D substantially parallel to the X direction. The front end part of the front projecting conductor 314D projects forward from the front surface of the front lid member 210D.

In Embodiment 4, the space for providing the front barrier conductor 312D and the front projecting conductor 314D can be also reduced as compared with the case where the front barrier conductor 312D and the front projecting conductor 314D are spaced apart from each other.

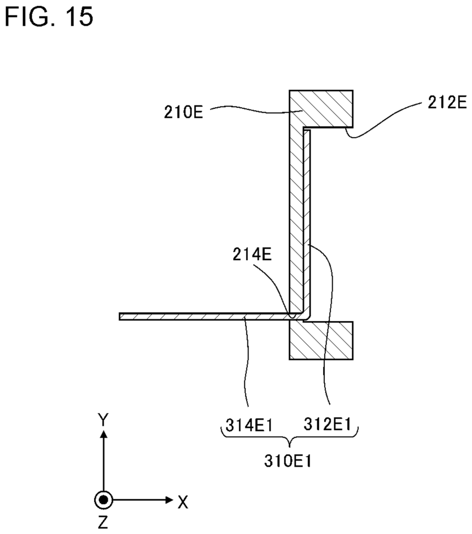

FIG. 15 is a schematic cross-sectional view of a front lid member 210E and a front conductor 310E1 according to a first example of Embodiment 5. The cross section shown in FIG. 15 shows a cross section parallel to the XY plane at the substantial center portion of the front lid member 210E and the front conductor 310E1 in the Z direction. The front lid member 210E and the front conductor 310E1 according to the first example of Embodiment 5 are the same as the front lid member 210A and the front conductor 310A according to Embodiment 1, except for the following points.

Hereinafter, as necessary, a side indicated by an arrow indicating the Y direction is referred to as a +Y side, and a side opposite to the side indicated by the arrow indicating the Y direction is referred to as a -Y side.

The front conductor 310E1 includes a front barrier conductor 312E1 and a projecting conductor 314E1. In the first example of Embodiment 5, the front conductor 310E1 is a conductor plate such as a metal lead plate. In the example shown in FIG. 15, the front conductor 310E1 has a substantial L-shape as viewed from the Z direction.

The front barrier conductor 312E1 covers at least a portion of the bottom surface of a recess portion 212E of the front lid member 210E. As viewed from the Z direction, the front barrier conductor 312E1 extends from the +Y side end part to the -Y side end part of the recess portion 212E. A positive electrode current collector, not illustrated, or a negative electrode current collector, not illustrated, is electrically connected to the rear surface of the front barrier conductor 312E1.

The projecting conductor 314E1 is bent at a substantially right angle with respect to the -Y side end part of the front barrier conductor 312E1 as viewed from the Z direction. The projecting conductor 314E1 projects forward from the front barrier conductor 312E1. The projecting conductor 314E1 extends through a through-hole 214E of the front lid member 210E substantially parallel to the X direction. The front end part of the projecting conductor 314E1 projects forward from the front surface of the front lid member 210E.

In the first example of Embodiment 5, the space for providing the front barrier conductor 312E1 and the projecting conductor 314E1 can be also reduced as compared with the case where the front barrier conductor 312E1 and the projecting conductor 314E1 are spaced apart from each other.

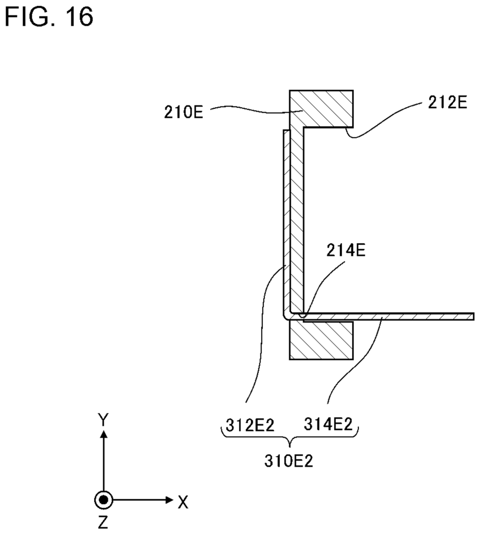

FIG. 16 is a schematic cross-sectional view of the front lid member 210E and a front conductor 310E2 according to a second example of Embodiment 5. The cross section shown in FIG. 16 shows a cross section parallel to the XY plane at the substantial center portion of the front lid member 210E and the front conductor 310E2 in the Z direction. The front lid member 210E and the front conductor 310E2 according to the second example of Embodiment 5 are the same as the front lid member 210E and the front conductor 310E1 according to the first example of Embodiment 5, except for the following points.

The front conductor 310E2 includes a front barrier conductor 312E2 and a projecting conductor 314E2. In the example shown in FIG. 16, the front conductor 310E2 has a substantial L-shape as viewed from the Z direction.

The front barrier conductor 312E2 covers at least a portion of the front surface of the front lid member 210E. As viewed from the Z direction, the +Y side end part of the front barrier conductor 312E2 overlaps the +Y side end part of the recess portion 212E in the X direction. As viewed from the Z direction, the -Y side end part of the front barrier conductor 312E2 overlaps the -Y side end part of the recess portion 212E in the X direction. As viewed from the Z direction, the front barrier conductor 312E2 extends substantially parallel to the Z direction between the end parts of the front barrier conductor 312E2.

The projecting conductor 314E2 is bent at a substantially right angle with respect to the -Y side end part of the front barrier conductor 312E2 as viewed from the Z direction. The projecting conductor 314E2 projects rearward from the front barrier conductor 312E2. The projecting conductor 314E2 extends through the through-hole 214E of the front lid member 210E substantially parallel to the X direction. The rear end part of the projecting conductor 314E2 projects rearward from the bottom surface of the recess portion 212E. A positive electrode current collector, not illustrated, or a negative electrode current collector, not illustrated, is electrically connected to the projecting conductor 314E2.

In the second example of Embodiment 5, the space for providing the front barrier conductor 312E2 and the projecting conductor 314E2 can be also reduced as compared with the case where the front barrier conductor 312E2 and the projecting conductor 314E2 are spaced apart from each other.

In Embodiment 5, the front conductor has a substantial L-shape as viewed from the Z direction. However, the orientation of the front conductor is not limited to this example. For example, the front conductor may have a substantial L-shape as viewed from the Y direction.

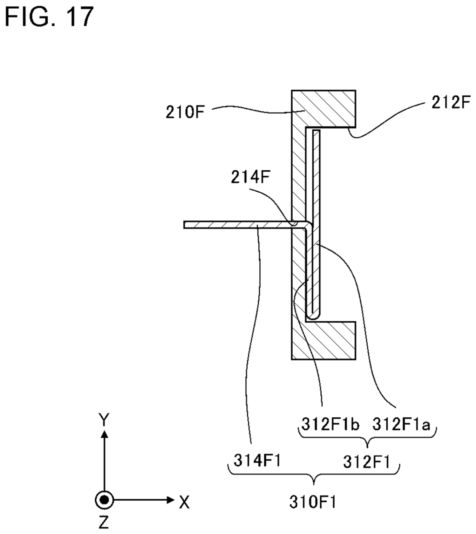

FIG. 17 is a schematic cross-sectional view of a front lid member 210F and a front conductor 310F1 according to a first example of Embodiment 6. The cross section shown in FIG. 17 shows a cross section parallel to the XY plane at the substantial center portion of the front lid member 210F and the front conductor 310F1 in the Z direction. The front lid member 210F and the front conductor 310F1 according to the first example of Embodiment 6 are the same as the front lid member 210A and the front conductor 310A according to Embodiment 1, except for the following points.

The front conductor 310F1 includes a front barrier conductor 312F1 and a projecting conductor 314F1. The front barrier conductor 312F1 includes an extending portion 312F1a and a folded portion 312F1b. In the first example of Embodiment 6, the front conductor 310F1 is a conductor plate such as a metal lead plate. In the example shown in FIG. 17, the front conductor 310F1 has a substantial T-shape as viewed from the Z direction.

The front barrier conductor 312F1 covers at least a portion of the bottom surface of a recess portion 212F of the front lid member 210F. Specifically, as viewed from the Z direction, the extending portion 312F1a extends from the +Y side end part to the -Y side end part of the recess portion 212F. A positive electrode current collector or a negative electrode current collector, not illustrated, is electrically connected to the rear surface of the extending portion 312F1a. The folded portion 312F1b is folded substantially by 180° with respect to the -Y side end part of the extending portion 312F1a as viewed from the Z direction. As viewed from the Z direction, the folded portion 312F1b extends from the -Y side end part of the recess portion 212F to the Y direction substantial center portion of the recess portion 212F.

The projecting conductor 314F1 is bent substantially at a right angle with respect to the +Y side end part of the folded portion 312F1b as viewed from the Z direction. The projecting conductor 314F1 projects forward from the folded portion 312F1b. The projecting conductor 314F1 extends through a through-hole 214F of the front lid member 210F substantially parallel to the X direction. The front end part of the projecting conductor 314F1 projects forward from the front surface of the front lid member 210F.

In the first example of Embodiment 6, the space for providing the front barrier conductor 312F1 and the projecting conductor 314F1 can be also reduced as compared with the case where the front barrier conductor 312F1 and the projecting conductor 314F1 are spaced apart from each other.

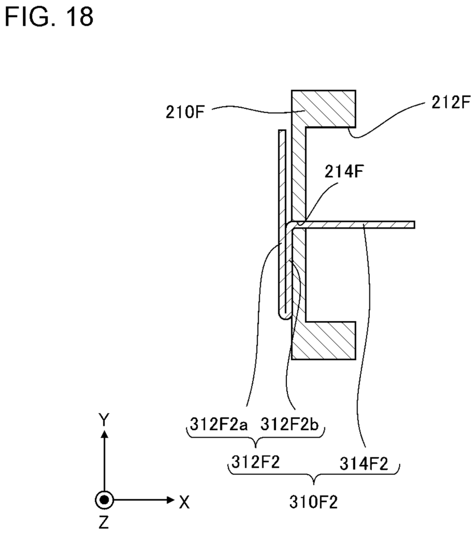

FIG. 18 is a schematic cross-sectional view of the front lid member 210F and a front conductor 310F2 according to a second example of Embodiment 6. The cross section shown in FIG. 18 shows a cross section parallel to the XY plane at the substantial center portion of the front lid member 210F and the front conductor 310F2 in the Z direction. The front lid member 210F and the front conductor 310F2 according to the second example of Embodiment 6 are the same as the front lid member 210F and the front conductor 310F1 according to the first example of Embodiment 6, except for the following points.

The front conductor 310F2 includes a front barrier conductor 312F2 and a projecting conductor 314F2. The front barrier conductor 312F2 includes an extending portion 312F2a and a folded portion 312F2b. In the example shown in FIG. 18, the front conductor 310F2 has a substantial T-shape as viewed from the Z direction.

The front barrier conductor 312F2 covers at least a portion of the front surface of the front lid member 210F. Specifically, as viewed from the Z direction, the +Y side end part of the extending portion 312F2a overlaps the +Y side end part of the recess portion 212F in the X direction. As viewed from the Z direction, the -Y side end part of the extending portion 312F2a overlaps the -Y side end part of the recess portion 212F in the X direction. The extending portion 312F2a extends substantially parallel to the Y direction between the end parts of the extending portion 312F2a as viewed from the Z direction. The folded portion 312F2b is folded substantially by 180° with respect to the -Y side end part of the extending portion 312F1a. The folded portion 312F2b extends substantially parallel to the Y direction as viewed from the Z direction. As viewed from the Z direction, the +Y side end part of the folded portion 312F2b overlaps the Y direction substantial center portion of the recess portion 212F in the X direction.

The projecting conductor 314F2 is bent substantially at a right angle with respect to the +Y side end part of the folded portion 312F2b as viewed from the Z direction. The projecting conductor 314F2 projects rearward from the folded portion 312F2b. The projecting conductor 314F2 extends through the through-hole 214F of the front lid member 210F substantially parallel to the X direction. The rear end part of the projecting conductor 314F2 projects rearward from the bottom surface of the recess portion 212F. A positive electrode current collector or a negative electrode current collector, not illustrated, is electrically connected to the projecting conductor 314F2.

In the second example of Embodiment 6, the space for providing the front barrier conductor 312F2 and the projecting conductor 314F2 can be also reduced as compared with the case where the front barrier conductor 312F2 and the projecting conductor 314F2 are spaced apart from each other.

In Embodiment 6, the front conductor has a substantial T-shape as viewed from the Z direction. However, the orientation of the front conductor is not limited to this example. For example, the front conductor may have a substantial T-shape as viewed from the Y direction.

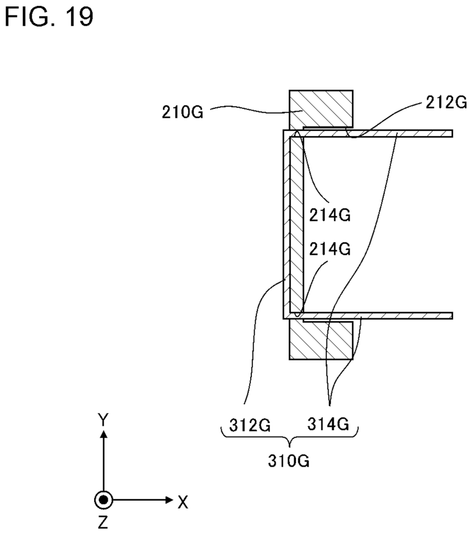

FIG. 19 is a schematic cross-sectional view of a front lid member 210G and a front conductor 310G according to Embodiment 7. The cross section shown in FIG. 19 shows a cross section parallel to the XY plane at substantially the center portion of the front lid member 210G and the front conductor 310G in the Z direction. The front lid member 210G and the front conductor 310G according to Embodiment 7 are the same as the front lid member 210A and the front conductor 310A according to Embodiment 1, except for the following points.

The front conductor 310G includes a front barrier conductor 312G and a pair of projecting conductors 314G. In Embodiment 7, the front conductor 310G is a conductor plate such as a metal lead plate. In the example shown in FIG. 19, the front conductor 310G has a substantial n-shape or substantial U-shape as viewed from the Z direction.

The front barrier conductor 312G covers at least a portion of the front surface of the front lid member 210G. The front barrier conductor 312G and a recess portion 212G of the front lid member 210G at least partially overlap each other in the X direction. As viewed from the Z direction, the +Y side end part of the front barrier conductor 312G overlaps +Y side end part of the recess portion 212G in the X direction. As viewed from the Z direction, the -Y side end part of the front barrier conductor 312G overlaps the -Y side end part of the recess portion 212G in the X direction. As viewed from the Z direction, the front barrier conductor 312G extends substantially parallel to the Y direction between the end parts of the front barrier conductor 312G.

The pair of projecting conductors 314G are bent at a substantially right angle with respect to the +Y side end part and the -Y side end part of the front barrier conductor 312G as viewed from the Z direction. Each projecting conductor 314G projects rearward from the front barrier conductor 312G. Each projecting conductor 314G extends through a through-hole 214G of the front lid member 210G substantially parallel to the X direction. The rear end part of each projecting conductor 314G projects rearward from the bottom surface of the recess portion 212G. For example, a positive electrode current collector, not illustrated, or a negative electrode current collector, not illustrated, is electrically connected to both of the pair of projecting conductors 314G. Alternatively, the positive electrode current collector may be electrically connected to one of the pair of projecting conductors 314G, and the negative electrode current collector may be electrically connected to the other of the pair of projecting conductors 314G.

In Embodiment 7, the space for providing the front barrier conductor 312G and the pair of projecting conductors 314G can be also reduced as compared with the case where the front barrier conductor 312G and the pair of projecting conductors 314G are spaced apart from each other.

In Embodiment 7, the pair of projecting conductors 314G project rearward from the front barrier conductor 312G covering at least a portion of the front surface of the front lid member 210G. However, as in Embodiment 1, the pair of projecting conductors 314G may project forward from the front barrier conductor 312G covering at least a portion of the bottom surface of the recess portion 212G. In this example, the space for providing the front barrier conductor 312G and the pair of projecting conductors 314G can be also reduced as compared with the case where the front barrier conductor 312G and the pair of projecting conductors 314G are spaced apart from each other.

In Embodiment 7, the front conductor 310G has a substantial n-shape or a substantial U-shape as viewed from the Z direction. However, the orientation of the front conductor 310G is not limited to this example. For example, the front conductor 310G may have a substantial n-shape or a substantial U-shape as viewed from the Y direction.

Although the embodiments and variants of the present invention have been described above with reference to the accompanying drawings, these are merely examples of the present invention, and various other configurations may be employed.

This application claims priority based on Japanese Patent Application No. 2023-007904 filed on January 23, 2023, the disclosure of which is incorporated herein in its entirety by reference.

### REFERENCE SIGNS LIST

10A battery cell, 100 battery element, 102a positive electrode current collector, 104a negative electrode current collector, 210A, 210A1, 210B, 210C, 210C1, 210D, 210E, 210F, 210G front lid member, 211A1 partition wall, 212A, 212B, 212C, 212C1, 212D, 212E, 212F, 212G recess portion, 212A1 first recess portion, 213A1 second recess portion, 214A, 214B, 214C, 214C1, 214D, 214E, 214F, 214G through-hole, 214A1 first through-hole, 215A1 second through-hole, 216A locking portion, 216A1 first locking portion, 217A1 second locking portion, 220A rear lid member, 252A, 252B sealing resin, 252A1 first sealing resin, 253A1 second sealing resin, 254A, 254B coating resin, 254A1 first coating resin, 255A1 second coating resin, 310A, 310B, 310B1, 310C, 310C1, 310D, 310E1, 310E2, 310F1, 310F2, 310G front conductor, 310A1 first front conductor, 312A, 312B, 312B1, 312C, 312C1, 312D, 312E1, 312E2, 312F1, 312F2, 312G front barrier conductor, 312A1 first front barrier conductor, 312F1a, 312F2a extending portion, 312F1b, 312F2b folded portion, 313B first slit, 314A, 314C, 314C1, 314D front projecting conductor, 314A1 first front projecting conductor, 314B front conductor element, 314aB external projecting conductor, 314bB internal projecting conductor, 314B1 projecting conductor, 314E1, 314E2, 314F1, 314F2, 314G projecting conductor, 315B second slit, 320A rear conductor, 320A1 second front conductor, 322A1 second front barrier conductor, 324A rear projecting conductor, 324A1 second front projecting conductor, 400 exterior film, 402 wound portion, 404 drawn portion, 404a first drawn portion, 404b second drawn portion, 500 accommodation space, 510 front sealing portion, 520 rear sealing portion, 530 side sealing portion

## Claims

1. A battery cell comprising:
a battery element;
a lid member covering an end part of the battery element;
an exterior film of which at least a part is wound around the battery element;
a barrier conductor covering at least a part of the lid member; and
a projecting conductor connected to the barrier conductor and projecting from the barrier conductor.

2. The battery cell according to Claim 1,
wherein the barrier conductor and the projecting conductor are integrated.

3. The battery cell according to Claim 1 or 2,
wherein the projecting conductor is bent with respect to the barrier conductor.

4. The battery cell according to Claim 1 or 2,
wherein the barrier conductor and the projecting conductor are joined to each other.

5. The battery cell according to Claim 1 or 2,
wherein the projecting conductor is stamped against the barrier conductor.

6. The battery cell according to Claim 1 or 2,
wherein the barrier conductor and the projecting conductor are extrudates.
